# FASCICULE DE BREVET EUROPEEN

(11) **EP 2 998 602 B1**
(45) Date de publication et mention de la délivrance du brevet: **01.11.2023**
(21) Numéro de dépôt: 15180083.6
(22) Date de dépôt: 06.08.2015
(51) Int. Cl.: F16D 13/74

(54) **MODULE DE TRANSMISSION DE COUPLE DESTINE A EQUIPER UNE TRANSMISSION D'UN VEHICULE AUTOMOBILE**
DREHMOMENT-ÜBERTRAGUNGSMODUL ZUR AUSRÜSTUNG EINER ÜBERTRAGUNG EINES KRAFTFAHRZEUGS
TORQUE TRANSMISSION MODULE INTENDED FOR BEING PROVIDED ON A TRANSMISSION OF A MOTOR VEHICLE

(30) Priorité: 18.09.2014 FR 1458837
(43) Date de publication de la demande: 23.03.2016
(73) Titulaire: Valeo Embrayages, 80009 Amiens Cedex 2 (FR)
(72) Inventeur: ARHAB, Rabah, 95350 ST BRICE SOUS FORET (FR); RIBOT, Herve, 80200 PERONNE (FR); CAUMARTIN, Laurent, 80600 BEAUQUESNE (FR)
(74) Mandataire: Valeo Powertrain Systems

(56) Documents cités:
- WO-A1-94/24450
- DE-A1-102010 022 237
- DE-A1-102012 204 939
- DE-A1-102012 212 174
- US-A1- 2009 205 924
- US-A1- 2013 153 355

## Description

La présente invention concerne un module de transmission de couple destiné à équiper une transmission d'un véhicule automobile.

Un tel module de transmission de couple est destiné à constituer une partie d'une transmission, notamment pour un véhicule automobile ou pour un véhicule dit industriel, ce dernier étant par exemple un poids lourd, un véhicule de transport en commun, ou un véhicule agricole.

La présente invention concerne plus particulièrement un module de transmission de couple comportant un double embrayage humide mobile en rotation autour d'un axe de rotation (X), qui est commandé pour accoupler sélectivement un arbre menant d'un moteur à explosion à un premier arbre mené et à un deuxième arbre mené d'une boite de vitesses,
ledit mécanisme à double embrayage humide comportant au moins un premier embrayage et un deuxième embrayage respectivement de type multidisques, chacun desdits premier et deuxième embrayages comportant au moins un piston mobile axialement qui est commandé en déplacement au moyen d'une chambre de commande à laquelle est associée une chambre d'équilibrage délimitée au moins par un piston d'équilibrage, ledit piston venant serrer axialement dans une position embrayée un ensemble multidisques contre des moyens de réaction, ledit ensemble multidisques comportant au moins des disques de friction liés en rotation à un porte-disques extérieur et des flasques qui sont liés en rotation par au moins un porte-disques intérieur à l'un desdits premier et deuxième arbres menés.

On connaît de l'art antérieur de tels systèmes de transmission comportant un mécanisme à double embrayage humide (ou « *Double Wet Clutch* » en anglais) généralement de type multidisques, ledit mécanisme étant implanté dans la cloche d'embrayage du véhicule automobile. Voir aussi les documents US 2009/ 205924, le DE 10 2012 204 939 et le US2013153355.

Dans ce genre de système de transmission, les garnitures de friction des disques doivent être maintenues en permanence humides par de l'huile. Cette contrainte implique la mise en place d'un dispositif de distribution d'huile très sophistiqué, destiné à alimenter le double embrayage humide en huile qui est généralement conçu et mise en oeuvre par le constructeur du véhicule. Ce dispositif de distribution d'huile comprend généralement une pompe d'alimentation à haute pression pour l'actionnement des pistons, une servocommande pour la distribution d'huile entre les deux embrayages, un boitier de distribution d'huile pour l'acheminement de l'huile depuis la servocommande jusqu'aux deux embrayages humides et un support d'embrayage qui intègre les canaux d'alimentation en huile du mécanisme à double embrayage.

Il est connu de l'art antérieur que le dispositif de distribution d'huile soit supporté en tout ou partie par la cloche d'embrayage. Lors de l'assemblage de la transmission du véhicule automobile, le mécanisme à double embrayage humide est alors rapporté séparément sur la ligne de fabrication et l'assemblage du mécanisme à double embrayage humide sur le support d'embrayage est intégré chez le constructeur du véhicule.

Le mécanisme à double embrayage humide est un ensemble fragile nécessitant d'être manipulé avec précaution lors des opérations de transport et d'assemblage sur la ligne de fabrication.

L'assemblage du mécanisme sur le support d'embrayage doit remplir deux fonctions essentielles pour le bon fonctionnement du système de transmission : la liaison pivot du mécanisme à double embrayage autour de l'axe de rotation (X) réalisée au moyen de roulements à aiguilles et l'étanchéité en huile des chambres de commande et des chambres d'équilibrage des deux embrayages humides réalisée au moyen de joints d'étanchéité.

Un tel assemblage n'est toutefois pas sans poser problème. En effet, il existe des risques d'endommagement des joints d'étanchéité et des roulements à aiguilles lors de l'assemblage. En raison de ce risque, le constructeur du véhicule est obligé d'effectuer un contrôle de la qualité de cet assemblage en sortie de ligne de fabrication.

Le but de la présente invention est notamment de proposer un module de transmission de couple comportant un mécanisme à double embrayage humide permettant de résoudre au moins une partie de certains inconvénients de l'art antérieur.

Dans ce but, l'invention propose un module de transmission de couple destiné à équiper une transmission de véhicule automobile, défini par les revendications.

Ce module de transmission de couple, selon l'invention, présente l'avantage, de proposer un sous-ensemble indépendant de la cloche d'embrayage. Le module de transmission de couple se présente sous la forme d'un boitier qui protège le mécanisme à double embrayage humide lors des opérations de transport et d'assemblage sur la ligne de fabrication.

L'invention peut présenter l'une ou l'autre des caractéristiques décrite ci-dessous combinée entre elles ou prises indépendamment les unes des autres.

De préférence, ledit couvercle, le mécanisme à double embrayage humide et le carter d'embrayage sont pré-montés pour former un ensemble unitaire.

Ce module de transmission de couple, selon l'invention, présente l'avantage, grâce au pré-montage pour former un ensemble unitaire, d'éviter une étape de contrôle supplémentaire lors de l'assemblage de la transmission en usine, ce qui permet de ne pas perturber la ligne de fabrication du constructeur du véhicule. Le module de transmission de couple peut être testé fonctionnellement chez le fabriquant du module et non plus chez le constructeur du véhicule.

Selon l'exemple de mise en oeuvre de l'invention, le dispositif de distribution d'huile peut comprendre au moins une pompe supportée en tout ou partie par le carter d'embrayage.

Avantageusement, le carter d'embrayage supporte une pompe basse pression d'alimentation en huile.

Avantageusement, le carter d'embrayage supporte une pompe haute pression d'alimentation en huile.

Le support en tout ou partie des pompes haute pression et/ou basse pression par le carter d'embrayage est caractéristique de l'invention et permet de réduire les coûts de fabrication et d'augmenter la fiabilité générale du module de transmission de couple. Le mécanisme à double embrayage humide selon l'invention comporte comme caractéristique un arbre cannelé d'entrée de couple s'étendant axialement vers l'extérieur du module et traversant le couvercle.

L'arbre cannelé d'entrée de couple est par exemple guidé en rotation sur le couvercle par l'intermédiaire d'un roulement à bille.

Le mécanisme à double embrayage humide présente une enveloppe externe de forme générale de révolution.

Selon l'exemple de mise en oeuvre de l'invention, le couvercle, en forme générale de cloche, présente une première ouverture située sur le sommet du couvercle et agencée pour le passage de l'arbre cannelé d'entrée de couple.

Le couvercle, en forme générale de cloche, peut présenter une deuxième ouverture délimitée sur son bord par une couronne annulaire et située sur l'embase du couvercle.

Avantageusement, le couvercle comporte une zone d'appui circulaire, aménagée sur la couronne annulaire et agencée pour venir en appui sur le carter d'embrayage de la transmission de véhicule automobile.

La zone d'appui peut comporter une surface cylindrique interne de centrage du couvercle sur le carter d'embrayage suivant l'axe (X).

Avantageusement, les première et deuxième ouvertures du couvercle sont circulaires et concentriques autour de l'axe (X).

De préférence, le couvercle est réalisé en matière acier ou aluminium.

Selon l'exemple de mise en oeuvre de l'invention, le couvercle et le carter d'embrayage sont liés entre eux par l'intermédiaire du serrage d'une série de premières vis de fixation.

La série de premières vis de fixation est par exemple répartie circonférentiellement autour de l'axe (X) sur la périphérie du couvercle et du carter d'embrayage.

De préférence, un joint d'étanchéité est disposé entre le couvercle et le carter d'embrayage et écrasé par le serrage de la série de premières vis de fixation.

Le joint d'étanchéité peut être du type joint torique.

En variante, le joint d'étanchéité est du type joint plat.

Le joint d'étanchéité est notamment réalisé en matière Nitrile^{™}, Viton^{™} ou caoutchouc.

Selon l'exemple de mise en oeuvre de l'invention, le carter d'embrayage, en forme générale de cloche, présente une première ouverture située sur le sommet du carter d'embrayage et agencée pour le passage des arbres de la boite de vitesses de la transmission de véhicule automobile.

Le carter d'embrayage, en forme générale de cloche, peut alors présenter une deuxième ouverture délimitée sur son bord par une couronne annulaire et située sur l'embase du carter d'embrayage.

Avantageusement, la couronne annulaire présente une série de trous taraudés apte à recevoir la série de premières vis de fixation.

Avantageusement, les première et deuxième ouvertures du carter d'embrayage sont circulaires et concentriques autour de l'axe (X).

Le carter d'embrayage, peut également présenter une troisième ouverture, en forme générale d'arc de cercle, aménagée sur le flan du carter d'embrayage et dont le bord radialement externe délimitant ladite troisième ouverture est tangent à la couronne annulaire.

Avantageusement, le bord radialement externe de la troisième ouverture est disposé par rapport à l'axe (X) sur un diamètre supérieur ou égal à l'enveloppe externe du mécanisme à double embrayage humide.

Cette troisième ouverture présente l'avantage d'éviter que de l'huile stagnante au fond du module de transmission de couple ne vienne en contact avec le mécanisme à double embrayage humide. On limite ainsi le couple de trainée et on améliore le rendement général de la transmission de couple.

De préférence, le carter d'embrayage est réalisé en matière acier ou aluminium.

Avantageusement, le carter d'embrayage du module de transmission de couple comporte une première zone d'appui circulaire, aménagée sur la couronne annulaire du carter d'embrayage et agencée pour venir en appui sur le couvercle.

Selon l'exemple de mise en oeuvre de l'invention, le dispositif de distribution d'huile comporte une boite de dérivation d'huile supportée en tout ou partie par le carter d'embrayage.

Avantageusement, la boite de dérivation d'huile entoure partiellement la première ouverture du carter d'embrayage.

Le dispositif de distribution d'huile peut comporter un support de moyeu fixé sur le carter d'embrayage.

Le support de moyeu peut comporter au moins un canal d'alimentation en huile destiné à acheminer l'huile depuis l'extérieur du module de transmission de couple jusqu'au mécanisme à double embrayage humide.

La boite de dérivation d'huile peut comporter au moins un canal d'alimentation en huile destiné à acheminer l'huile depuis l'extérieur du module de transmission de couple jusqu'au mécanisme à double embrayage humide.

Le canal d'alimentation en huile de la boite de dérivation d'huile peut alors communiquer avec le canal d'alimentation en huile du support de moyeu.

La boite de dérivation d'huile peut comporter des canaux d'alimentation en huile répartis circonférentiellement autour de la première ouverture du carter d'embrayage.

De préférence, le support de moyeu et le carter d'embrayage sont liés entre eux par l'intermédiaire du serrage d'une série de troisièmes vis de fixation.

L'invention a également pour objet de proposer un ensemble de transmission, notamment pour un véhicule automobile, comportant au moins :
- une cloche d'embrayage, et
- le module de transmission de couple tel que défini ci-dessus.

Avantageusement, le carter d'embrayage du module de transmission de couple comporte une deuxième zone d'appui circulaire, aménagée sur la couronne annulaire du carter d'embrayage et agencée pour venir en appui sur la cloche d'embrayage de la transmission de véhicule automobile.

La deuxième zone d'appui du carter d'embrayage comporte une surface cylindrique externe de centrage du carter d'embrayage sur la cloche d'embrayage suivant l'axe (X).

De préférence, le module de transmission de couple est fixé sur la cloche d'embrayage de la transmission de véhicule automobile par l'intermédiaire du serrage d'une série de deuxièmes vis de fixation.

L'ensemble de transmission présente l'avantage d'apporter un montage simplifié du mécanisme à double embrayage humide lors de l'assemblage de la transmission en usine. Le montage est effectué à l'aide de vis de fixation conventionnelles.

Avantageusement, un joint d'étanchéité est disposé entre le module de transmission de couple et la cloche d'embrayage de la transmission de véhicule automobile et écrasé par le serrage de la série de deuxièmes vis de fixation.

Le joint d'étanchéité peut être du type joint torique.

En variante, le joint d'étanchéité est du type joint plat.

Le joint d'étanchéité est notamment réalisé en matière Nitrile^{™}, Viton^{™} ou caoutchouc.

De préférence, la série de deuxièmes vis de fixation est répartie circonférentiellement autour de l'axe (X) sur la périphérie du carter d'embrayage.

Avantageusement, les premières vis de fixation et les deuxièmes vis de fixation sont réparties circonférentiellement de manière alternée autour de l'axe (X).

L'invention concerne également une transmission, notamment pour un véhicule automobile, pour lier sélectivement en rotation au moins un arbre mené de la boîte de vitesses à un arbre menant du moteur à explosion, ladite transmission comportant au moins :
- un volant moteur lié en rotation à l'arbre menant,
- un mécanisme de filtration des acyclismes,
- une boite de vitesses,
laquelle transmission comporte le module de transmission de couple selon l'invention.

Avantageusement, le module de transmission de couple est agencé axialement entre le volant moteur et la boîte de vitesses.

De préférence, l'arbre cannelé d'entrée de couple du mécanisme à double embrayage humide est lié en rotation avec le mécanisme de filtration des acyclismes.

L'invention a également pour objet, selon un autre aspect, de proposer un module de transmission de couple destiné à équiper une transmission de véhicule automobile, caractérisé en ce que ledit module comporte au moins :
- un couvercle,
- un carter d'embrayage
- un mécanisme à double embrayage humide,
- et un dispositif de distribution d'huile destiné à alimenter le mécanisme à double embrayage humide en huile, le dispositif comprenant au moins une pompe supportée en tout ou partie par le carter.

De préférence, au moins le couvercle, le mécanisme à double embrayage humide et le carter d'embrayage sont pré-montés pour former un ensemble unitaire.

Le module selon cet autre aspect peut comprendre tout où partie des caractéristiques mentionnées précédemment.

L'invention sera mieux comprise à la lecture de la description qui va suivre, donnée uniquement à titre d'exemple et faite en se référant aux dessins annexés dans lesquels :
- la figure 1 est une vue en perspective d'une chaine cinématique de transmission comportant un module de transmission de couple selon un mode de mise en oeuvre privilégié de l'invention ;
- la figure 2 est une vue en coupe de la chaine cinématique de transmission et du module de transmission de couple passant par l'axe X de la figure 1 ;
- la figure 3 est une vue en perspective du module de transmission de couple de la figure 1 ;
- la figure 4 est une vue en perspective du module de transmission de couple et de la cloche d'embrayage de la figure 1 ;
- la figure 5 est une vue partielle et agrandie de la vue en coupe du module de transmission de couple de la figure 2 ;
- la figure 6 est une autre vue en coupe selon VI - VI du module de transmission de couple de la figure 2 ;
- la figure 7 est une vue en perspective et en écorché du carter d'embrayage de la figure 3.

Dans la suite de la description et les revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule automobile et les termes « intérieur / interne » ou « extérieur / externe » par rapport à l'axe X et suivant une orientation radiale, orthogonale à ladite orientation axiale.

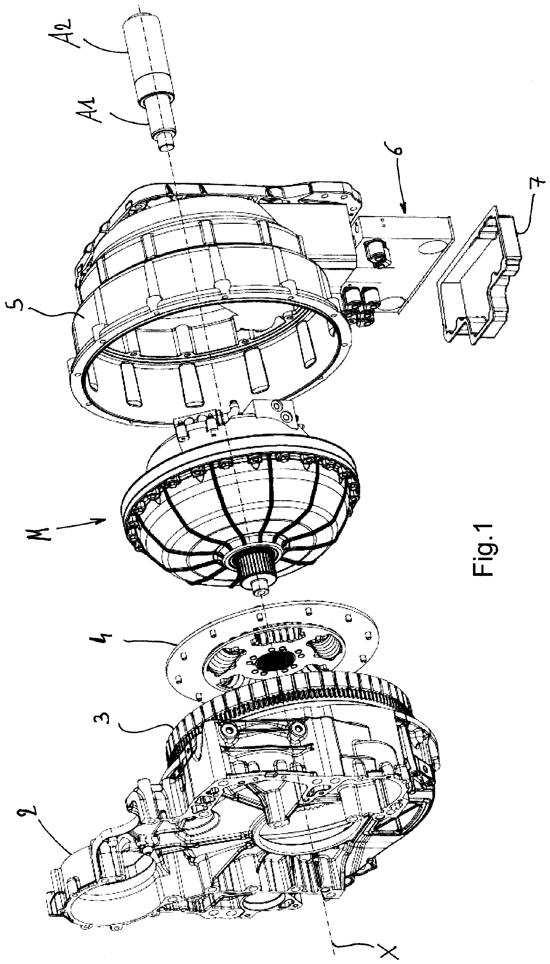

On a représenté sur la figure 1 une transmission 1 d'un véhicule automobile comprenant :
- un carter de moteur à explosion 2,
- un volant moteur 3,
- un mécanisme de filtration des acyclismes 4 coopérant avec le volant moteur 3,
- un module de transmission de couple M,
- une cloche d'embrayage 5 associée au carter de moteur à explosion 2,
- une servocommande 6,
- un carter d'huile 7,
- deux arbres A1, A2 menés d'une boite de vitesses (non représentée) associés au module de transmission de couple M.

Le module de transmission de couple M, la cloche d'embrayage 5 et le carter d'huile 7 sont assemblés de manière à former un contenant dans lequel est reçu la servocommande 6. La servocommande 6 est fixée sur le module de transmission de couple M.

Le carter d'huile 7 est fixé sur la cloche d'embrayage 5 par l'intermédiaire du serrage de vis de fixation (non représentées). Un joint d'étanchéité (non représenté) est disposé entre le carter d'huile 7 et la cloche d'embrayage 5 et écrasé par le serrage des vis de fixation de manière à créer une étanchéité à un fluide, par exemple de l'huile, présent dans la cloche d'embrayage 5 et au fond du carter d'huile 7.

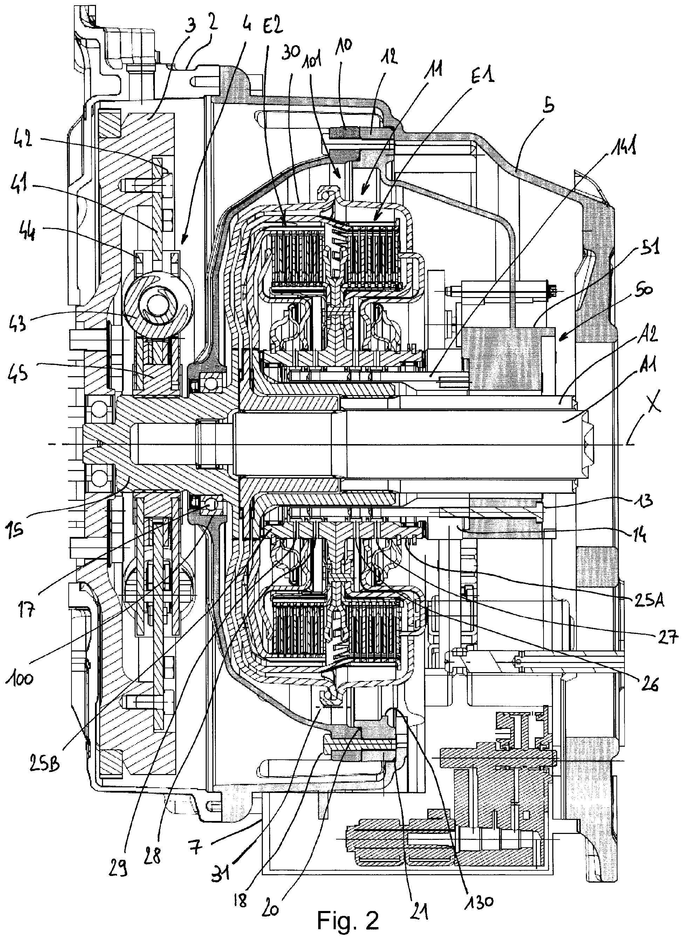

On a représenté sur la figure 2 certains composants de la transmission 1 d'un véhicule automobile et les composants du module de transmission de couple M.

Contenu dans le carter de moteur à explosion 2, on trouve le volant moteur 3 fixé sur le vilebrequin du moteur à explosion (non représenté). La transmission du couple moteur depuis le volant moteur vers la boite de vitesses se fait par un mécanisme de filtration des acyclismes 4. Le mécanisme de filtration des acyclismes 4 comprend un voile primaire 41 lié en rotation sur le volant moteur 3 par l'intermédiaire de vis de fixation 42. Le voile primaire 41 est lié par des ressorts hélicoïdaux 43 à un organe secondaire 44 constitué par deux rondelles de guidage solidaire d'un moyeu cannelé 45. Le moyeu cannelé 45 est lié en rotation avec un arbre cannelé 15 d'entrée de couple du module de transmission de couple M.

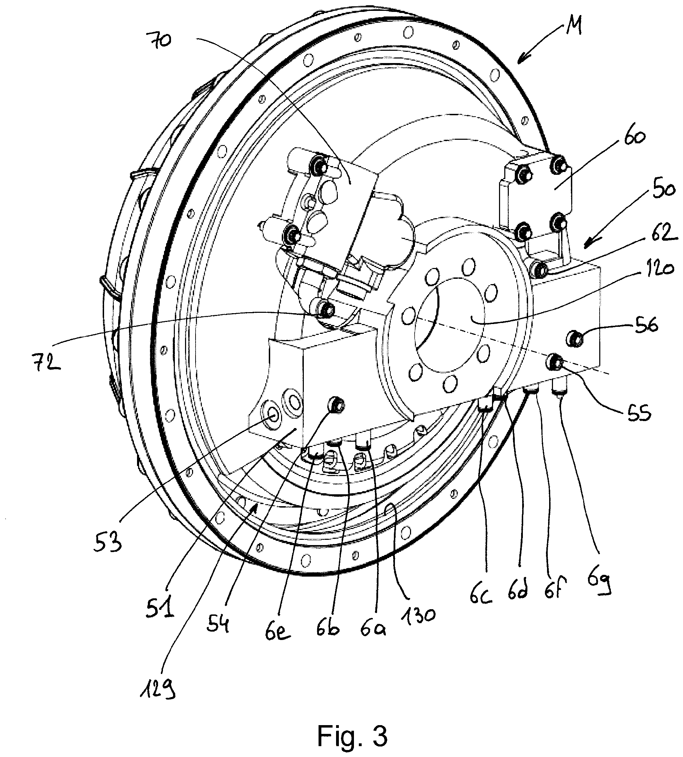

Comme illustré sur les figures 2 et 3, le module de transmission de couple M comprend:
- un couvercle 10,
- un mécanisme 11 à double embrayage humide mobile en rotation autour d'un axe (X), et
- un carter d'embrayage 12, comportant un dispositif de distribution d'huile 50 destiné à alimenter le double embrayage humide en huile sous la commande de la servocommande 6.

Le dispositif de distribution d'huile 50 comporte un support de moyeu 14 fixé sur le carter d'embrayage 12. Le support de moyeu 14 supporte en rotation le mécanisme 11 à double embrayage humide par l'intermédiaire de roulements à aiguille.

Le couvercle 10 et le carter d'embrayage 12 sont en forme générale de cloche. Le couvercle 10 et le carter d'embrayage 12 sont assemblés de manière à former un boîtier définissant un logement dans lequel est reçu en partie le mécanisme 11 à double embrayage humide. Le couvercle 10 et le carter d'embrayage 12 sont fabriqués en utilisant des procédés de fonderie.

Le mécanisme 11 à double embrayage humide comporte un arbre cannelé 15 d'entrée de couple qui s'étend axialement vers l'extérieur du module M et traverse le couvercle 10 par une première ouverture 100 située sur le sommet du couvercle. L'arbre cannelé 15 d'entrée de couple est guidé en rotation sur le couvercle 10 par l'intermédiaire d'un roulement à bille 17. Le roulement à bille 17 assure l'étanchéité en huile sur la partie arrière du module de transmission de couple M.

Le mécanisme à double embrayage humide 11 présente une enveloppe externe 31 de forme générale de révolution. Cette enveloppe externe définie le volume tournant du mécanisme 11.

Le mécanisme 11 à double embrayage humide est commandé pour accoupler sélectivement ledit arbre menant à un premier arbre A1 mené et à un deuxième A2 arbre mené de la boite de vitesses.

De préférence, le premier arbre A1 mené et le deuxième A2 arbre mené sont coaxiaux.

Le mécanisme 11 à double embrayage humide comporte au moins un premier embrayage E1 et un deuxième embrayage E2, qui sont respectivement de type multidisques.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 11 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier embrayage E1 et deuxième embrayage E2 sont inversés.

Le premier embrayage E1 est par exemple agencé axialement à l'avant du côté de la boîte de vitesses et le deuxième embrayage E2 est par exemple agencé axialement à l'arrière du côté du moteur.

Le premier embrayage E1 et le deuxième embrayage E2 transmettent alternativement la puissance d'entrée (le couple et la vitesse) de l'arbre menant, que reçoit la coquille 30 d'entrée du mécanisme 11, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par une servocommande 6 pour passer de l'état ouvert à l'état fermé.

Le mécanisme 11 à double embrayage humide est commandé hydrauliquement par l'intermédiaire d'un fluide sous pression, généralement de l'huile.

Pour commander sélectivement le changement d'état du premier embrayage E1 et du deuxième embrayage E2 du mécanisme 11 du module de transmission de couple M, le dispositif de distribution d'huile 50 utilise le support de moyeu 14 comportant des canaux 141 d'alimentation en huile, par exemple au nombre de quatre tel que représenté sur la figure 2.

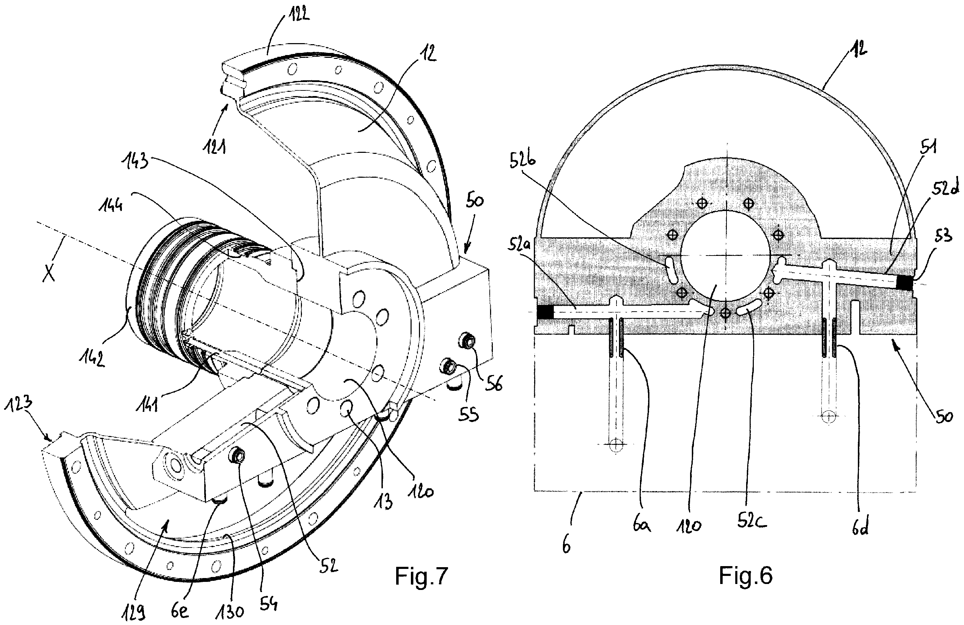

Tel qu'illustré sur la figure 7, le support de moyeu 14 présente une forme générale de révolution comprenant une surface externe cylindrique 142 et une face avant 143 en appui sur le carter d'embrayage 12.

Un canal d'alimentation en huile 141 comprend généralement un premier conduit d'orientation axiale débouchant sur la face avant 143 du support de moyeu, un deuxième conduit orthogonal à l'axe X et débouchant dans le premier conduit et une gorge circulaire 144 usinée sur la périphérie de la surface externe 142 dans laquelle débouche le deuxième conduit.

De manière complémentaire, le mécanisme 11 à double embrayage humide comporte au moins un moyeu 25A, 25B comportant des perçages radiaux qui sont chacun reliés à l'un des canaux 141 d'alimentation en huile.

De préférence, ledit au moins un moyeu est réalisé en deux parties, un premier moyeu 25A et un deuxième moyeu 25B respectivement associés au premier embrayage E1 et au deuxième embrayage E2.

Le premier moyeu 25A comporte deux perçages 26 et 27 qui sont associés à la commande du premier embrayage E1 situé axialement à l'avant et le deuxième moyeu 25B comporte également deux perçages 28 et 29 qui sont associés à la commande du deuxième embrayage E2 situé axialement à l'arrière.

Les premier moyeu 25A et un deuxième moyeu 25B pivotent autour du support de moyeu 14 suivant l'axe de rotation X.

Ainsi, les quatre gorges circulaires 114 du support de moyeu 14 sont disposées axialement en regard des perçages 26, 27, 28 et 29 des moyeux 25A et 25B de manière à alimenter séparément les chambres de piston hydraulique des embrayages E1 et E2. Un joint d'étanchéité est disposé entre chaque gorge de manière à assurer l'étanchéité entre les différents canaux d'alimentation. Le joint d'étanchéité est généralement de type torique.

On a représenté sur les figures 3 et 7, le carter d'embrayage 12, comportant un dispositif de distribution d'huile 50 destiné à alimenter le double embrayage humide en huile. Le dispositif de distribution d'huile 50 comporte lui-même une boite de dérivation d'huile 51 supportée en tout ou partie par le carter d'embrayage 12 et le moyeu de support 14. Dans l'exemple décrit, la boite de dérivation d'huile est intégrée au carter d'embrayage 12. Le support de moyeu 14 et le carter d'embrayage 12 sont liés entre eux par l'intermédiaire du serrage d'une série de troisièmes vis de fixation 13.

Comme déjà vu précédemment, le support de moyeu 14 comporte quatre canaux d'alimentation en huile 141a, 141b, 141c, 141d. Les canaux d'alimentations en huile 141a, 141b, 141c, 141d sont réalisés par des moyens d'usinage de type perçage. De manière alternative, les canaux d'alimentations en huile 141a, 141b, 141c, 141d sont réalisés par des moyens de fonderie.

Le carter d'embrayage 12 présente également une première ouverture 120 située sur le sommet du carter d'embrayage et agencée pour le passage des arbres de la boite de vitesses de la transmission de véhicule automobile.

Comme illustré sur la figure 6, la boite de dérivation d'huile 51 entoure partiellement la première ouverture 120 du carter d'embrayage. La boite de dérivation d'huile 51 comporte des canaux d'alimentation en huile 52a, 52b, 52c, 52d destinés également à acheminer l'huile depuis l'extérieur du module de transmission de couple M jusqu'au mécanisme 11 à double embrayage humide. Les canaux 52a, 52b, 52c, 52d sont répartis circonférentiellement autour de la première ouverture 120 et communiquent respectivement avec les canaux d'alimentation en huile 141a, 141b, 141c, 141d du support de moyeu 14. Les canaux 52a, 52b, 52c, 52d d'alimentation en huile communiquent avec la servocommande 6 avec l'aide respectivement des moyens de connexions 6a, 6b, 6c, 6d.

Les canaux d'alimentation en huile 52a, 52b, 52c, 52d sont réalisés par des moyens d'usinage de type perçage ou fraisage. De manière alternative, les canaux d'alimentations en huile 52a, 52b, 52c, 52d sont réalisés par des moyens de fonderie.

Le dispositif de distribution d'huile 50 tel que représenté sur la figure 3 comprend deux pompes 60, 70 supportées par le carter d'embrayage 12. Le carter d'embrayage 12 dispose ainsi de deux zones d'appui généralement usinée dans la masse servant de face de fixation aux carters des pompes 60, 70. Les pompes sont fixées mécaniquement sur le carter d'embrayage 12 à l'aide de vis de fixation. Dans l'exemple décrit, le carter extérieur de la pompe est distinct du carter d'embrayage.

La pompe 70 est ici du type basse pression 70 avec comme fonction principale de prélever de l'huile depuis le fond du carter d'huile 7 et de la refouler jusqu'à un circuit de refroidissement situé en dehors de la cloche d'embrayage 5.

La compréhension du fonctionnement du circuit de circulation d'huile à basse pression sera plus facile à la lecture du paragraphe suivant :
L'huile est aspirée depuis le fond du carter d'huile 7 par la pompe basse pression à l'aide d'un tuyau (non représenté) plongeant dans le réservoir d'huile. Le tuyau est relié à un connecteur hydraulique d'entrée de la pompe basse pression. La pompe basse pression 70 refoule l'huile en direction d'un échangeur thermique par l'intermédiaire d'un connecteur de sortie 72. L'huile refroidie sous l'action de l'échangeur thermique revient dans la boite de dérivation d'huile 51 par l'intermédiaire d'un connecteur d'entrée 54. L'huile refroidie circule dans la boite de distribution d'huile 51 avant d'être envoyée directement dans la servocommande 6 par l'intermédiaire d'un moyen de connexion 6e.

La pompe 60 est ici du type haute pression 60 avec comme principale fonction de prélever de l'huile depuis le fond du carter d'huile 7 et de la refouler jusqu'à un filtre à huile situé en dehors de la cloche d'embrayage 5.

La compréhension du fonctionnement du circuit de circulation d'huile à haute pression sera plus facile à la lecture du paragraphe suivant :
L'huile est aspirée depuis le fond du carter d'huile 7 par la pompe haute pression à l'aide d'un tuyau (non représenté) plongeant dans le réservoir d'huile. Le tuyau est relié à un connecteur hydraulique d'entrée de la pompe haute pression. La pompe haute pression 60 refoule l'huile en direction tout d'abord d'un filtre à huile par l'intermédiaire d'un connecteur de sortie 62. L'huile filtrée en raison de son passage dans le filtre à huile revient dans la boite de dérivation d'huile 51 par l'intermédiaire d'un connecteur d'entrée 55. L'huile filtrée circule dans la boite de distribution d'huile 51 avant d'être envoyée directement dans la servocommande 6 par l'intermédiaire d'un moyen de connexion 6f.

La servocommande 6 a pour principale fonction de piloter l'alimentation en huile des chambres de piston hydraulique des embrayages E1 et E2. Pour cela, la servocommande 6 envoie de l'huile sous pression dans chacun des canaux 52a, 52b, 52c, 52d de la boite de distribution d'huile 51.

La boite de dérivation d'huile 51 comporte également un connecteur d'entrée d'huile 56 relié à un accumulateur d'huile situé en dehors de la cloche d'embrayage 5. L'huile circulant dans la boite de distribution 51 en provenance de l'accumulateur est dirigée vers la servocommande 6 par l'intermédiaire d'un moyen de connexion 6g.

La boite de dérivation d'huile 51 comporte également des bouchons 53 de canalisation. Les bouchons 53 de canalisation sont emmanchés en force dans les extrémités débouchantes des canaux 52a, 52b, 52c, 52d de manière à assurer l'étanchéité de la boite de distribution d'huile 51.

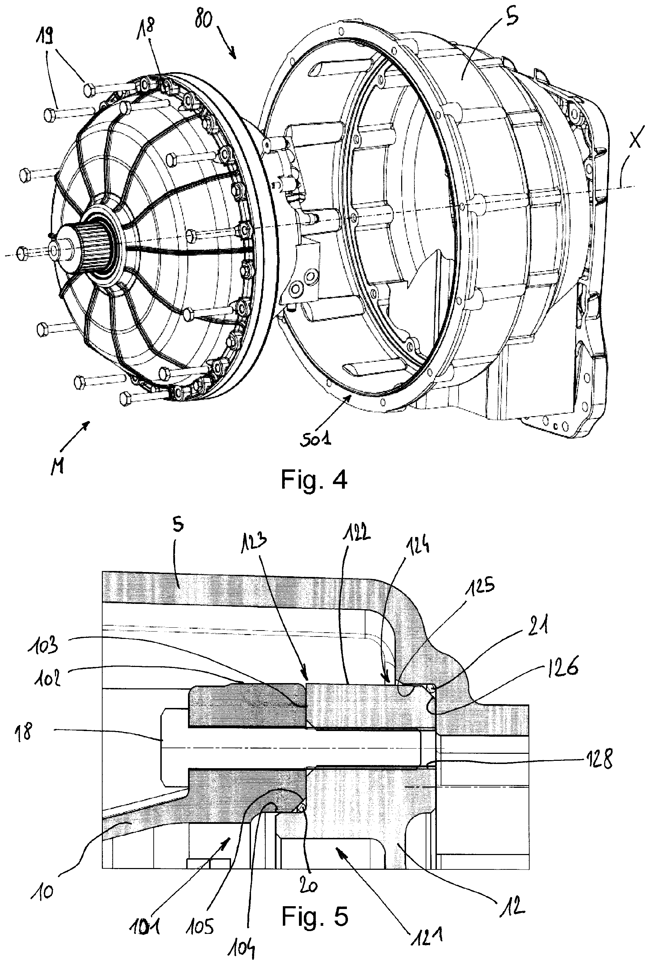

On a représenté sur les figures 4 et 5, un ensemble de transmission 80, comportant :
- la cloche d'embrayage 5, et
- le module de transmission de couple M selon l'invention.

Le couvercle 10 du module de transmission de couple M, en forme générale de cloche, présente une deuxième ouverture 101 délimitée sur son bord par une couronne annulaire 102 et située sur l'embase du couvercle. La couronne annulaire 102 présente une section massive destinée à apporter de la rigidité au couvercle 10. Une zone d'appui 103 circulaire est aménagée sur la couronne annulaire 102. Elle est agencée pour venir en appui sur une première zone d'appui 123 du carter d'embrayage 12 de la transmission de véhicule automobile. La zone d'appui 103 comporte une surface cylindrique interne de centrage 104 du couvercle sur le carter d'embrayage suivant l'axe X et une zone plane d'appui. Un chanfrein de liaison 105 est aménagé entre la surface cylindrique interne 104 et la zone plane. Les première et deuxième ouvertures 100, 101 du couvercle 10 sont circulaires et concentriques autour de l'axe X.

La figure 5 présente une vue de détail de la liaison couvercle 10 par rapport au carter d'embrayage 12. Le couvercle 10 et le carter d'embrayage 12 sont liés entre eux par l'intermédiaire du serrage d'une série de premières vis de fixation 18. La série de premières vis de fixation 18 est répartie circonférentiellement autour de l'axe X sur la périphérie du couvercle 10 et du carter d'embrayage 12.

Le module de transmission de couple M a notamment pour fonction de contenir le volume d'huile nécessaire au fonctionnement du mécanisme 11 à double embrayage humide. Un joint d'étanchéité 20 est disposé entre le couvercle 10 et le carter d'embrayage 12 et écrasé par le serrage de la série de premières vis de fixation 18.

Le joint d'étanchéité 20 est du type joint torique ou joint plat. La matière du joint peut être en Nitrile^{™}, Viton^{™}. Afin de limiter l'encombrement axial, le joint d'étanchéité 20 est logé dans l'espace compris entre le chanfrein de liaison 105 du couvercle 10 et la première zone d'appui 123 du carter d'embrayage 12.

Comme illustré sur les figures 4 et 5, le carter d'embrayage 12, en forme générale de cloche, présente une deuxième ouverture 121 délimitée sur son bord par une couronne annulaire 122 et située sur l'embase du carter d'embrayage. Les première et deuxième ouvertures 120, 121 du carter d'embrayage sont circulaires et concentriques autour de l'axe X.

La couronne annulaire 122 présente une section massive destinée à apporter de la rigidité au carter d'embrayage 12. La couronne annulaire 122 présente une série de trous taraudés 128 apte à recevoir la série de premières vis de fixation 18.

Une deuxième zone d'appui 124 circulaire est aménagée sur la couronne annulaire 122. Elle est agencée pour venir en appui sur une zone d'appui 501 de la cloche d'embrayage 5 de la transmission de véhicule automobile. La deuxième zone d'appui 124 du carter d'embrayage comporte une surface cylindrique externe de centrage 125 du carter d'embrayage sur la cloche d'embrayage 5 suivant l'axe X et une zone plane d'appui. Un chanfrein de liaison 126 est aménagé entre la surface cylindrique externe 125 et la zone plane.

Le module de transmission de couple M et la cloche d'embrayage 5 sont liés entre eux par l'intermédiaire du serrage d'une série de deuxièmes vis de fixation 19. La série de deuxièmes vis de fixation 19 est répartie circonférentiellement autour de l'axe (X) sur la périphérie du carter d'embrayage 12. Les premières vis de fixation et les deuxièmes vis de fixation 18, 19 sont réparties circonférentiellement de manière alternée autour de l'axe X.

L'ensemble de transmission 80 a notamment pour fonction de contenir le volume d'huile nécessaire au fonctionnement du module de transmission de couple M. Un joint d'étanchéité 21 est disposé entre le module de transmission de couple M et la cloche d'embrayage 5 de la transmission de véhicule automobile et écrasé par le serrage de la série de deuxièmes vis de fixation 19.

Le joint d'étanchéité 21 est du type joint torique. La matière du joint peut être en Nitrile^{™}, Viton^{™}.

Afin de limiter l'encombrement axial, le joint d'étanchéité 21 est logé dans l'espace compris entre le chanfrein de liaison 126 du carter d'embrayage 12 et la zone d'appui 501 de la cloche d'embrayage 5. Suivant un autre exemple de mise en oeuvre possible, le centrage du carter d'embrayage sur la cloche d'embrayage peut se faire sur une surface cylindrique interne de centrage du carter d'embrayage 12. Dans ce cas, le joint d'étanchéité peut être implanté radialement sur un diamètre inférieur au diamètre d'implantation de la série de deuxièmes vis de fixation 19.

Comme illustré sur les figures 3 et 7, le carter d'embrayage 12 présente également une troisième ouverture 129, en forme générale d'arc de cercle, aménagée sur le flan du carter d'embrayage. Cette troisième ouverture 129 ne débouche pas dans les première et deuxième ouvertures 120, 121 du carter d'embrayage. Le bord radialement externe 130 qui délimite la troisième ouverture 129 est tangent à la couronne annulaire 122. La troisième ouverture est située dans la partie inférieure du carter d'embrayage dans une zone où l'huile contenue dans le module de transmission de couple vient reposer sous l'effet de la gravité. Afin d'éviter la stagnation de l'huile dans cette zone, le bord radialement externe 130 de la troisième ouverture est disposé par rapport à l'axe de rotation X sur un diamètre supérieur ou égal à l'enveloppe externe 31 du mécanisme à double embrayage humide. L'huile peut alors se déverser plus facilement dans le fond du le fond du carter d'huile 7. La forme décrite de la troisième ouverture 129 n'est pas limitative. La troisième ouverture 129 peut être remplacée par une série d'ouvertures, de type trous de perçage, aménagées en bordure de la couronne annulaire 122.

## Revendications

1. Module de transmission de couple (M) destiné à équiper une transmission (1) de véhicule automobile, comprenant:
- un couvercle (10),
- un mécanisme (11) à double embrayage humide mobile en rotation autour d'un axe (X), et
- un carter d'embrayage (12), comportant un dispositif de distribution d'huile destiné à alimenter le double embrayage humide en huile,
le couvercle (10) et le carter d'embrayage (12) étant assemblés de manière à former un boîtier définissant un logement dans lequel est reçu en partie le mécanisme à double embrayage humide, le boîtier étant apte à être reçu en tout ou partie dans une cloche d'embrayage (5) de la transmission,
le mécanisme (11) à double embrayage humide comportant un arbre cannelé (15) d'entrée de couple s'étendant axialement vers l'extérieur du module (M) et traversant le couvercle (10) et **caractérisé en ce que** le dispositif de distribution d'huile (50) comprend au moins une pompe (60, 70) supportée en tout ou partie par le carter d'embrayage (12).

2. Module de transmission de couple (M) selon la revendication 1 **caractérisé en ce que** ledit couvercle (10), le mécanisme (11) à double embrayage humide et le carter d'embrayage (12) sont pré-montés pour former un ensemble unitaire.

3. Module de transmission de couple (M) selon l'une des revendications précédentes, **caractérisé en ce que** le couvercle (10), en forme générale de cloche, présente une première ouverture (100) située sur le sommet du couvercle et agencée pour le passage de l'arbre cannelé (15) d'entrée de couple.

4. Module de transmission de couple (M) selon l'une des revendications précédentes, **caractérisé en ce que** le couvercle (10) et le carter d'embrayage (12) sont liés entre eux par l'intermédiaire du serrage d'une série de premières vis de fixation (18).

5. Module de transmission de couple (M) selon l'une des revendications précédentes, **caractérisé en ce que** le carter d'embrayage (12), en forme générale de cloche, présente une première ouverture (120) située sur le sommet du carter d'embrayage et agencée pour le passage des arbres de la boite de vitesses de la transmission de véhicule automobile.

6. Module de transmission de couple (M) selon la revendication 5, **caractérisé en ce que** le carter d'embrayage (12), en forme générale de cloche, présente une deuxième ouverture (121) délimitée sur son bord par une couronne annulaire (122) et située sur l'embase du carter d'embrayage.

7. Module de transmission de couple (M) selon la revendication 6, **caractérisé en ce que** le carter d'embrayage (12) présente une troisième ouverture (129), en forme générale d'arc de cercle, aménagée sur le flan du carter d'embrayage et dont le bord radialement externe (130) délimitant ladite troisième ouverture est tangent à la couronne annulaire (122).

8. Module de transmission de couple (M) selon la revendication 7, **caractérisé en ce que** le bord radialement externe (130) de la troisième ouverture est disposé par rapport à l'axe X sur un diamètre supérieur ou égal à l'enveloppe externe (31) du mécanisme à double embrayage humide.

9. Module de transmission de couple (M) selon l'une des revendications précédentes, **caractérisé en ce que** ledit dispositif de distribution d'huile (50) comporte une boite de dérivation d'huile (51) supportée en tout ou partie par le carter d'embrayage (12).

10. Module de transmission de couple (M) selon la revendication 9, **caractérisé en ce que** la boite de dérivation d'huile (51) entoure partiellement la première ouverture (120) du carter d'embrayage.

11. Module de transmission de couple (M) selon la revendication 10, **caractérisé en ce que** le dispositif de distribution d'huile (50) comporte un support de moyeu (14) fixé sur le carter d'embrayage.

12. Module de transmission de couple (M) selon la revendication 11, **caractérisé en ce que** le support de moyeu (14) comporte au moins un canal d'alimentation en huile (141) destiné à acheminer l'huile depuis l'extérieur du module de transmission de couple (M) jusqu'au mécanisme à double embrayage humide.

13. Module de transmission de couple (M) selon la revendication 12, **caractérisé en ce que** la boite de dérivation d'huile (51) comporte au moins un canal d'alimentation en huile (52) destiné à acheminer l'huile depuis l'extérieur du module de transmission de couple (M) jusqu'au mécanisme (11) à double embrayage humide.

14. Module de transmission de couple (M) selon la revendication 13, **caractérisé en ce que** le canal d'alimentation en huile (52) de la boite de dérivation d'huile (51) communique avec le canal d'alimentation en huile (141) du support de moyeu (14).

15. Module de transmission de couple (M) selon l'une quelconques des revendications 9 à 14, **caractérisé en ce que** la boite de dérivation d'huile (51) comporte des canaux d'alimentation en huile (52) répartis circonférentiellement autour de la première ouverture (120) du carter d'embrayage (12).

16. Ensemble de transmission (80), notamment pour un véhicule automobile, comportant au moins :
- une cloche d'embrayage (5), et
- un module de transmission de couple (M) selon l'une quelconque des revendications précédentes.

17. Ensemble de transmission (80) selon la revendication précédente, **caractérisé en ce que** le carter d'embrayage (12) du module de transmission de couple (M) comporte une deuxième zone d'appui (124) circulaire, aménagée sur la couronne annulaire (122) et agencée pour venir en appui sur la cloche d'embrayage (5) de la transmission de véhicule automobile.

18. Ensemble de transmission (80) selon la revendication précédente, **caractérisé en ce que** ledit module (M) est fixé sur la cloche d'embrayage (5) de la transmission de véhicule automobile par l'intermédiaire du serrage d'une série de deuxièmes vis de fixation (19).

19. Transmission (1), notamment pour un véhicule automobile, pour lier sélectivement en rotation au moins un arbre (A1, A2) mené de la boîte de vitesses à un arbre menant du moteur à explosion, ladite transmission (1) comportant au moins :
- un volant moteur (3) lié en rotation à l'arbre menant,
- un mécanisme de filtration des acyclismes (4),
- une boite de vitesses,
laquelle transmission comporte le module de transmission de couple (M) selon l'une quelconque des revendications 1 à 15 ou l'ensemble de transmission selon l'une quelconque des revendications 16 à 18.

## Patentansprüche

1. Drehmoment-Übertragungsmodul (M), welches zur Ausrüstung einer Kraftübertragung (1) eines Kraftfahrzeugs bestimmt ist, umfassend:
- einen Deckel (10),
- einen nassen Doppelkupplungsmechanismus (11), der um eine Achse (X) drehbeweglich ist, und
- ein Kupplungsgehäuse (12), das eine Ölverteilungsvorrichtung aufweist, die dazu bestimmt ist, die nasse Doppelkupplung mit Öl zu versorgen,
wobei der Deckel (10) und das Kupplungsgehäuse (12) so zusammengebaut sind, dass sie ein Gehäuse bilden, das eine Aufnahme definiert, in welcher der nasse Doppelkupplungsmechanismus teilweise aufgenommen ist, wobei das Gehäuse geeignet ist, ganz oder teilweise in einer Kupplungsglocke (5) der Kraftübertragung aufgenommen zu werden,
wobei der nasse Doppelkupplungsmechanismus (11) eine Drehmomenteingangs-Keilwelle (15) aufweist, die sich axial zur Außenseite des Moduls (M) erstreckt und den Deckel (10) durchquert,
**dadurch gekennzeichnet, dass** die Ölverteilungsvorrichtung (50) mindestens eine Pumpe (60, 70) umfasst, die ganz oder teilweise von dem Kupplungsgehäuse (12) getragen wird.

2. Drehmoment-Übertragungsmodul (M) nach Anspruch 1, **dadurch gekennzeichnet, dass** der Deckel (10), der nasse Doppelkupplungsmechanismus (11) und das Kupplungsgehäuse (12) vormontiert sind, so dass sie eine Baueinheit bilden.

3. Drehmoment-Übertragungsmodul (M) nach einem der vorhergehenden Ansprüche, **dadurch gekennzeichnet, dass** der Deckel (10), mit der allgemeinen Form einer Glocke, eine erste Öffnung (100) aufweist, die sich am Scheitel der Glocke befindet und für den Durchgang der Drehmomenteingangs-Keilwelle (15) eingerichtet ist.

4. Drehmoment-Übertragungsmodul (M) nach einem der vorhergehenden Ansprüche, **dadurch gekennzeichnet, dass** der Deckel (10) und das Kupplungsgehäuse (12) durch das Festziehen einer Reihe von ersten Befestigungsschrauben (18) miteinander verbunden sind.

5. Drehmoment-Übertragungsmodul (M) nach einem der vorhergehenden Ansprüche, **dadurch gekennzeichnet, dass** das Kupplungsgehäuse (12), mit der allgemeinen Form einer Glocke, eine erste Öffnung (120) aufweist, die sich am Scheitel des Kupplungsgehäuses befindet und für den Durchgang der Wellen des Getriebes der Kraftübertragung des Kraftfahrzeugs eingerichtet ist.

6. Drehmoment-Übertragungsmodul (M) nach Anspruch 5, **dadurch gekennzeichnet, dass** das Kupplungsgehäuse (12), mit der allgemeinen Form einer Glocke, eine zweite Öffnung (121) aufweist, die an ihrem Rand von einem ringförmigen Kranz (122) begrenzt wird und sich am Fuß des Kupplungsgehäuses befindet.

7. Drehmoment-Übertragungsmodul (M) nach Anspruch 6, **dadurch gekennzeichnet, dass** das Kupplungsgehäuse (12) eine dritte Öffnung (129) mit der allgemeinen Form eines Kreisbogens aufweist, die an der Seite des Kupplungsgehäuses angeordnet ist und deren radial äußerer Rand (130), der die dritte Öffnung begrenzt, tangential zu dem ringförmigen Kranz (122) verläuft.

8. Drehmoment-Übertragungsmodul (M) nach Anspruch 7, **dadurch gekennzeichnet, dass** der radial äußere Rand (130) der dritten Öffnung in Bezug auf die Achse X auf einem Durchmesser angeordnet ist, der größer oder gleich der äußeren Hülle (31) des nassen Doppelkupplungsmechanismus ist.

9. Drehmoment-Übertragungsmodul (M) nach einem der vorhergehenden Ansprüche, **dadurch gekennzeichnet, dass** die Ölverteilungsvorrichtung (50) einen Ölabzweigkasten (51) aufweist, der ganz oder teilweise von dem Kupplungsgehäuse (12) getragen wird.

10. Drehmoment-Übertragungsmodul (M) nach Anspruch 9, **dadurch gekennzeichnet, dass** der Ölabzweigkasten (51) die erste Öffnung (120) des Kupplungsgehäuses teilweise umgibt.

11. Drehmoment-Übertragungsmodul (M) nach Anspruch 10, **dadurch gekennzeichnet, dass** die Ölverteilungsvorrichtung (50) einen Nabenträger (14) aufweist, der am Kupplungsgehäuse befestigt ist.

12. Drehmoment-Übertragungsmodul (M) nach Anspruch 11, **dadurch gekennzeichnet, dass** der Nabenträger (14) mindestens einen Ölversorgungskanal (141) aufweist, der dazu bestimmt ist, das Öl von außerhalb des Drehmoment-Übertragungsmoduls (M) bis zu dem nassen Doppelkupplungsmechanismus zu transportieren.

13. Drehmoment-Übertragungsmodul (M) nach Anspruch 12, **dadurch gekennzeichnet, dass** der Ölabzweigkasten (51) mindestens einen Ölversorgungskanal (52) aufweist, der dazu bestimmt ist, das Öl von außerhalb des Drehmoment-Übertragungsmoduls (M) bis zu dem nassen Doppelkupplungsmechanismus (11) zu transportieren.

14. Drehmoment-Übertragungsmodul (M) nach Anspruch 13, **dadurch gekennzeichnet, dass** der Ölversorgungskanal (52) des Ölabzweigkastens (51) mit dem Ölversorgungskanal (141) des Nabenträgers (14) in Verbindung steht.

15. Drehmoment-Übertragungsmodul (M) nach einem der Ansprüche 9 bis 14, **dadurch gekennzeichnet, dass** der Ölabzweigkasten (51) Ölversorgungskanäle (52) aufweist, die in Umfangsrichtung um die erste Öffnung (120) des Kupplungsgehäuses (12) verteilt sind.

16. Kraftübertragungsanordnung (80), insbesondere für ein Kraftfahrzeug, welche mindestens umfasst:
- eine Kupplungsglocke (5) und
- ein Drehmoment-Übertragungsmodul (M) nach einem der vorhergehenden Ansprüche.

17. Kraftübertragungsanordnung (80) nach dem vorhergehenden Anspruch, **dadurch gekennzeichnet, dass** das Kupplungsgehäuse (12) des Drehmoment-Übertragungsmoduls (M) einen zweiten kreisförmigen Anlagebereich (124) aufweist, der an dem ringförmigen Kranz (122) angeordnet ist und dafür eingerichtet ist, an der Kupplungsglocke (5) der Kraftübertragung des Kraftfahrzeugs zur Anlage zu kommen.

18. Kraftübertragungsanordnung (80) nach dem vorhergehenden Anspruch, **dadurch gekennzeichnet, dass** das Modul (M) an der Kupplungsglocke (5) der Kraftübertragung des Kraftfahrzeugs durch das Festziehen einer Reihe von zweiten Befestigungsschrauben (19) befestigt ist.

19. Kraftübertragung (1), insbesondere für ein Kraftfahrzeug, um mindestens eine Abtriebswelle (A1, A2) des Getriebes mit einer Antriebswelle des Verbrennungsmotors selektiv drehfest zu verbinden, wobei die Kraftübertragung (1) mindestens umfasst:
- eine Schwungscheibe (3), die mit der Antriebswelle drehverbunden ist
- einen Mechanismus zur Filterung der Drehungleichförmigkeiten (4)
- ein Getriebe,
wobei die Kraftübertragung das Drehmoment-Übertragungsmodul (M) nach einem der Ansprüche 1 bis 15 oder die Kraftübertragungsanordnung nach einem der Ansprüche 16 bis 18 umfasst.

## Claims

1. A torque transmission module (M) intended to be part of a motor vehicle transmission (1), comprising:
- a cover (10),
- a double wet clutch mechanism (11) movable rotationally around an axis (X), and
- a clutch cover (12) having an oil distribution device intended to supply oil to the double wet clutch,
the cover (10) and the clutch cover (12) being assembled so as to form a casing defining a receptacle in which the double wet clutch mechanism is partly received, the casing being able to be received entirely or in part in a clutch housing (5) of the transmission,
the double wet clutch mechanism (11) having a splined torque input shaft (15) extending axially toward the outside of the module (M) and passing through the cover (10) and
**characterized in that** the oil distribution device (50) comprises at least one pump (60, 70) supported entirely or in part by the clutch cover (12) .

2. The torque transmission module (M) according to Claim 1, wherein said cover (10), the double wet clutch mechanism (11), and the clutch cover (12) are pre-assembled to form an integral assemblage.

3. The torque transmission module (M) according to one of the preceding claims, wherein the cover (10), in the general shape of a bell, exhibits a first opening (100) located at the apex of the cover and arranged for passage of the splined torque input shaft (15).

4. The torque transmission module (M) according to one of the preceding claims, wherein the cover (10) and the clutch cover (12) are connected to one another by tightening a series of first fastening bolts (18).

5. The torque transmission module (M) according to one of the preceding claims, wherein the clutch cover (12), in the general shape of a bell, exhibits a first opening (120) located at the apex of the clutch cover and arranged for passage of the gearbox shafts of the motor vehicle transmission.

6. The torque transmission module (M) according to Claim 5, wherein the clutch cover (12), in the general shape of a bell, exhibits a second opening (121) delimited on its edge by an annular collar (122) and located on the base of the clutch cover.

7. The torque transmission module (M) according to Claim 6, wherein the clutch cover (12) exhibits a third opening (129), in the general shape of a circular arc, configured on the flank of the clutch cover, the radially outer edge (130) of which delimits said third opening and is tangent to the annular collar (122).

8. The torque transmission module (M) according to Claim 7, wherein the radially outer edge (130) of the third opening is disposed with respect to the axis (X) on a diameter greater than or equal to the outer envelope (31) of the double wet clutch mechanism.

9. The torque transmission module (M) according to one of the preceding claims, wherein said oil distribution device (50) has an oil bypass box (51) supported entirely or in part by the clutch cover (12).

10. The torque transmission module (M) according to Claim 9, wherein the oil bypass box (51) partly surrounds the first opening (120) of the clutch cover.

11. The torque transmission module (M) according to Claim 10, wherein the oil distribution device (50) a hub support (14) fastened on the clutch cover.

12. The torque transmission module (M) according to Claim 11, wherein the hub support (14) has at least one oil supply channel (141) intended to convey oil from outside the torque transmission module (M) to the double wet clutch mechanism.

13. The torque transmission module (M) according to Claim 12, wherein the oil bypass box (51) has at least one oil supply channel (52) intended to convey oil from outside the torque transmission module (M) to the double wet clutch mechanism (11) .

14. The torque transmission module (M) according to Claim 13, wherein the oil supply channel (52) of the oil bypass box (51) communicates with the oil supply channel (141) of the hub support (14).

15. The torque transmission module (M) according to any one of Claims 9 to 14, wherein the oil bypass box (51) has oil supply channels (52) distributed circumferentially around the first opening (120) of the clutch cover (12).

16. A transmission assemblage (80), in particular for a motor vehicle, having at least:
- a clutch housing (5), and
- a torque transmission module (M) according to any one of the preceding claims.

17. The transmission assemblage (80) according to the preceding claim, wherein the clutch cover (12) of the torque transmission module (M) has a second circular abutment region (124) configured on the annular collar (122) and arranged to come into abutment against the clutch housing (5) of the motor vehicle transmission.

18. The transmission assemblage (80) according to the preceding claim, wherein said module (M) is fastened on the clutch housing (5) of the motor vehicle transmission by tightening a series of second fastening bolts (19).

19. A transmission (1), in particular for a motor vehicle, for selectively rotationally connecting at least one driven shaft (A1, A2) of the gearbox to a driving shaft of the combustion engine, said transmission (1) having at least:
- an engine flywheel (3) rotationally connected to the driving shaft,
- a mechanism (4) for filtering irregularities,
- a gearbox,
said transmission having the torque transmission module (M) according to any one of Claims 1 to 15 or the transmission assemblage according to any one of Claims 16 to 18.
